# FASCICULE DE BREVET EUROPEEN

(11) **EP 0 490 733 B1**
(45) Date de publication et mention de la délivrance du brevet: **22.02.1995**
(21) Numéro de dépôt: 91403298.2
(22) Date de dépôt: 06.12.1991
(51) Int. Cl.: B60J 10/06, B60J 10/08

(54) **Dispositif d'étanchéité pour cadre de baie à vitre coulissante ou fixe**
Dichtungsvorrichtung eines Fensteröffnungsrahmens für eine absenkbare oder feste Glasscheibe
Sealing device of window frame opening for a sliding or fixed window pane

(30) Priorité: 07.12.1990 FR 9015338
(43) Date de publication de la demande: 17.06.1992
(73) Titulaire: HUTCHINSON S.A., F-75008 Paris (FR); REGIE NATIONALE DES USINES RENAULT S.A., 92109 Boulogne Billancourt (FR)
(72) Inventeur: Gueneau, Patrick, F-78470 Saint Remy Les Chevreuse (FR); Massie, Bernard, F-92300 Levallois Perret (FR); Guillon, Henri, F45700 Le Bois Saint Maurice sur Fessart (FR)
(74) Mandataire: Ernst-Schonberg, Michel

(56) Documents cités:
- EP-A- 0 308 377
- EP-A- 0 378 419
- GB-A- 2 216 936

## Description

La présente invention est relative à un dispositif d'étanchéité pour cadre de baie à vitre fixe ou mobile, notamment pour porte d'automobiles à glace ou vitre coulissante.

De tels dispositifs, généralement désignés sous le nom de coulisses verticales ou horizontales lorsqu'ils équipent des portes d'automobiles à vitre mobile se composent habituellement d'un profilé ayant des lèvres d'étanchéité en élastomère ou plastomère relativement souple et une partie en élastomère ou plastomère relativement dur, sensiblement en forme d'U ou de π et qui sert au montage de la coulisse sur la ou les tôles de la porte ou de la carrosserie du véhicule qu'elle équipe. De nombreuses réalisations de telles coulisses ont déjà été proposées pour résoudre le double problème posé par la nécessité d'habiller le cadre de porte, tout en assurant l'étanchéité des deux faces de la surface mobile à sa jonction avec ledit cadre dans lequel elle est montée, et cela sans gêner son coulissement, aussi bien pour des glaces ou vitres d'automobile de type usuel que du type affleurantes, ou sensiblement affleurantes, comme décrit dans EP-A-0 308 377 ou DE-A-3512973. Dans certaines réalisations connues, les coulisses sont en deux parties de sorte qu'aux inconvénients liés aux coûts de gestion d'un nombre important de pièces détachées s'ajoutent ceux de tenue et d'aspect après montage de même que ceux entraînés par des défauts d'étanchéité, comme le bruit et/ou la détérioration des pièces exposées, en raison de la difficulté de réaliser une jonction satisfaisante des deux parties de la coulisse. En outre, le montage des coulisses connues sur la feuillure de baie qu'elles équipent est souvent relativement complexe, d'une part et, d'autre part, ne permet pas d'obtenir de façon simple l'aspect esthétique recherché pour le cadre de porte et qui est généralement désigné dans la technique sous le nom de "noir de style".

C'est, d'une façon générale, un but de l'invention de fournir un dispositif d'étanchéité pour cadre de baie à vitre mobile ou fixe, notamment pour cadre de porte de véhicule automobile à vitre coulissante, qui ne présente pas les inconvénients des dispositifs connus.

C'est, aussi, un but de l'invention de fournir un tel dispositif pour portes de véhicule à glaces ou vitres affleurantes, ou sensiblement affleurantes qui, tout en assurant les fonctions fondamentales de double étanchéité, contribue également à l'aspect esthétique requis pour les véhicules comportant ce type de vitres.

C'est, encore, un but de l'invention de fournir un tel dispositif propre à équiper les différentes portes actuellement utilisées dans l'industrie automobile, en particulier celles comportant un caisson embouti rigidifié par un élément profilé et garni d'une peau extérieure sertie sur le caisson.

C'est, enfin, un but de l'invention de fournir un tel dispositif propre à être monté de manière simple et durable sur la totalité de la feuillure d'une porte d'automobile qui doit être garnie d'une coulisse, et cela quelle que soit la forme du cadre de ladite porte.

Un dispositif d'étanchéité pour un cadre de vitre G notamment de porte de véhicule, du type comportant une première partie (1) de fixation et de montage sur la feuillure intérieure du cadre qui constitue une coulisse de vitre à lèvres d'étanchéité (5, 6, 7) au contact de la vitre et une deuxième partie (3) d'étanchéité du caisson de porte reliée à ladite première partie par une zone souple (Dispositif du type divulgué, par exemple, dans DE-A-3 512 973) est caractérisé, selon l'invention, en ce que lesdites première (1) et seconde partie (3) sont séparées par une charnière (4) et que ladite seconde partie (3) a sensiblement la forme d'une équerre et porte dans son angle rentrant un doigt d'accrochage (3c) au contact d'un bord d'ancrage (r) porté notamment par la porte du véhicule.

Selon un mode de réalisation de l'invention, le dispositif est cintré et, le cas échéant, galbé pour lui donner, avant montage, la forme même du cadre qu'il équipe.

En variante, le dispositif qui est généralement réalisé en élastomère(s) et/ou plastomère(s) de duretés différentes comprend, dans la zone de jonction d'un bras de la "pince" de montage en π et d'une aile de la coulisse proprement dite, un cordon en matériau élastomère ou plastomère de plus faible dureté que le reste du dispositif et qui permet à ce dernier d'épouser le contour du cadre de porte quelle que soit la forme spatiale de ce dernier.

Dans une réalisation préférée, le dispositif est d'une pièce avec un brin vertical et un brin horizontal/avant d'une coulisse de porte avant ou un brin horizontal/postérieur d'une coulisse de porte arrière, le brin vertical étant raccordé au reste du dispositif par un accouplement en onglet rigidifié sur la face interne du dispositif par un insert en équerre sur lequel est ensuite surmoulé un des matériaux constitutifs du dispositif.

Dans une réalisation de l'invention, une jupe souple, solidaire de ladite seconde partie sensiblement au niveau de l'angle de l'équerre et à l'extérieur de celle-ci, est propre à masquer la surface extérieure desdites première et seconde parties après montage du dispositif sur la baie qu'il est destiné à équiper.

Dans un mode d'exécution, ladite jupe se prolonge, du côté opposé à celui de son attache à ladite première partie et au-delà du sommet de l'équerre où elle est solidaire de ladite seconde partie, par une courte languette qui prend appui, dans sa condition opératoire, sur la carrosserie du véhicule ou de la porte qu'équipe le dispositif.

Selon une variante d'exécution, ladite jupe se prolonge au-delà du sommet de l'équerre par un profilé formant un dièdre dont l'extrémité de la branche qui n'est pas rattachée à l'équerre est solidaire de l'aile de l'équerre non reliée à ladite première partie.

Dans un mode préféré de réalisation de l'invention, ladite première partie a, en section droite, quelque peu une forme de esse (S) dont l'âme médiane limite, d'une part, une gouttière formant la coulisse proprement dite qui comporte les lèvres d'étanchéité pour la glace ou vitre mobile et, d'autre part, la pince de montage et de fixation du dispositif sur la feuillure de porte.

Les lèvres qui assurent l'étanchéité sur les deux faces de la vitre ou glace mobile sont réalisées en un matériau de faible dureté et sont dans leur zone opératoire soit munies d'un floc soit, de préférence, revêtues d'un matériau à bonnes propriétés de glissement comme une polyoléfine, du polytétrafluoroéthylène ou analogue.

Dans une réalisation avantageuse où les lèvres sont ainsi revêtues d'un matériau à bonnes propriétés de glissement, celui-ci est également rapporté sur l'ensemble du dispositif ce qui, d'une part, facilite son montage sur les tôles du caisson de porte et, d'autre part, lui donne à un aspect d'ensemble particulièrement agréable.

Quel que soit le mode de réalisation de l'invention, il est éventuellement, mais non nécessairement, que la première partie au moins du dispositif puisse être rendue plus résistante mécaniquement par une armature métallique, en acier ou en aluminium noyée dans le(s) matériau(x) élastomère(s) et ou plastomère(s) formant la pince d'accrochage sur la feuillure et la coulisse proprement dite, les lèvres d'étanchéité et ladite seconde partie étant, quant à elles, démunies d'armature.

L'invention sera mieux comprise et d'autres caractéristiques apparaîtront à la lecture de la description qui suit faite en référence au dessin annexé dans lequel :
- la figure 1 est une vue en élévation d'une automobile ;
- la figure 2 montre, en coupe transversale, un premier dispositif suivant l'invention avant montage sur la feuillure d'une baie que le dispositif doit équiper ;
- la figure 3 est une vue analogue à celle de la figure 2, mais après montage du dispositif ;
- la figure 4 montre, en coupe transversale, un deuxième dispositif suivant l'invention avant montage;
- la figure 5 est une vue analogue à celle de la figure 4, mais après montage ;
- la figure 6 montre, en coupe transversale, un troisième dispositif suivant l'invention avant montage;
- la figure 7 est une vue analogue à celle de la figure 6, mais après montage ;
- la figure 8 est une vue analogue à celles des figures 3, 5 et 7 pour une autre forme de réalisation d'un dispositif selon l'invention ;
- la figure 9 est une vue analogue à celle de la figure 8 pour une autre forme de réalisation préférée;
- la figure 10 est une vue schématique des portes d'une automobile munies de dispositifs suivant l'invention ;
- la figure 11 est une vue très schématique à plus grande échelle d'un coin d'un dispositif monté sur la figure 10.

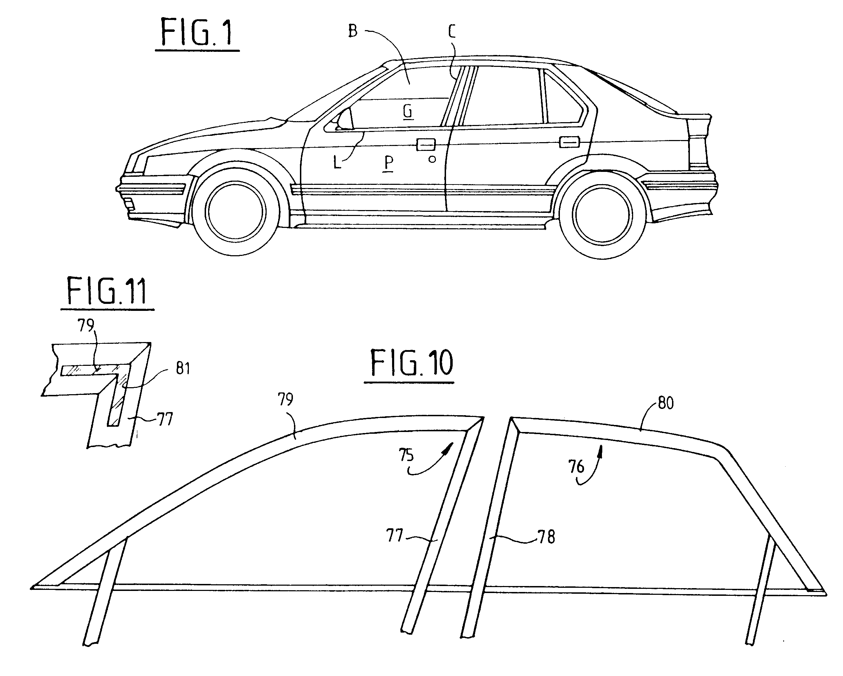

On se réfère d'abord à la figure 1 qui montre une automobile dont une porte P présente une baie B propre à être obturée par une vitre ou glace G représentée en position semi-baissée. L'étanchéité du bord inférieur de la baie à la pluie, au sable, à la poussière et plus généralement vis-à-vis de l'introduction de tout élément ou particule solide, liquide ou gazeuse ainsi qu'aux ondes sonores est assurée par au moins un lécheur L, tandis que l'étanchéité du bord supérieur et des bords latéraux est assurée, simultanément au guidage de la vitre ou glace G, par des coulisses C fixées sur la feuillure de la baie de porte P. Dans de nombreuses réalisations connues le lécheur comme les coulisses sont montées et solidarisés sur la feuillure par une "pince", c'est-à-dire une partie en matériau relativement dur et à section droite ayant une forme générale de π que l'on met en place par enfoncement à pression sur la feuillure, la finition étant complétée par un joint auxiliaire qui est alors rapporté. Cette double opération est coûteuse en temps et en argent et, étant donné, en outre, que le raccord de la coulisse au joint auxiliaire n'est jamais parfait, il en résulte des inconvénients d'aspect, de tenue, de bruit et de mauvaise étanchéité de ces dispositifs connus.

Pour s'affranchir de ces inconvénients, un dispositif d'étanchéité pour cadre de baie à vitre coulissante ou fixe réunit, en un seul ensemble unitaire, à la fois les moyens procurant les fonctions d'étanchéité des deux faces de la glace ou vitre G et ceux permettant de fournir un joint aérodynamique de finition, tout en étant d'un montage simple et sûr, le dispositif fournissant également, complémentairement, l'effet esthétique recherché de "noir de style" sur la face externe de la porte.

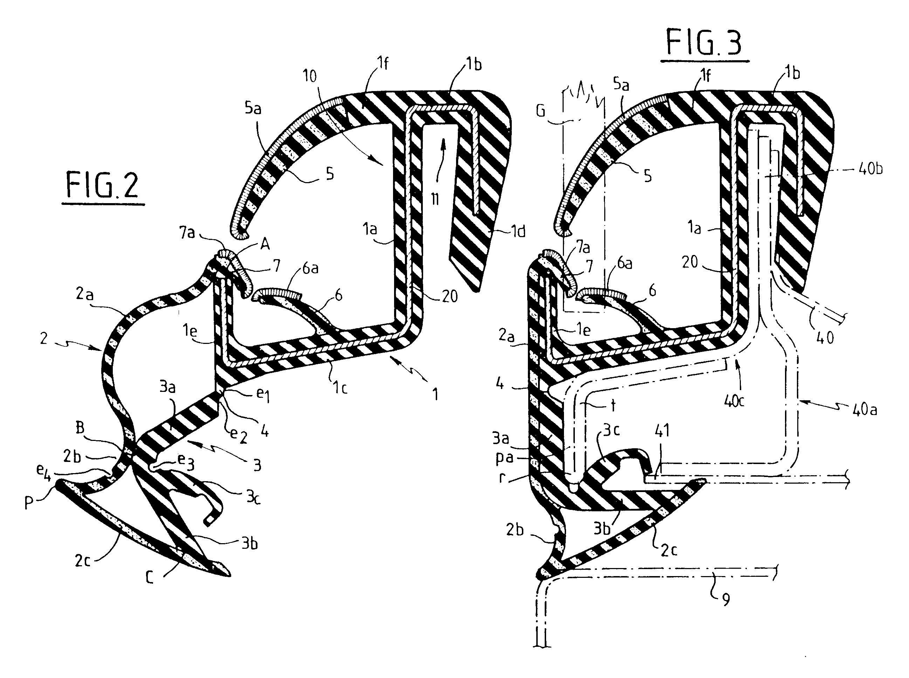

Un premier mode de réalisation d'un dispositif suivant l'invention est représenté sur les figures 2 et 3 en condition déployée avant montage et en condition montée sur la feuillure de la baie de la porte, respectivement. Le dispositif comporte une première partie 1, en matériau élastomère ou plastomère, relativement dur et rigide qui comprend la coulisse 10 proprement dite et dont la section droite est quelque peu celle d'une esse incorporant, -le cas échéant, mais non nécessairement-, une armature métallique 20, découpée, en aluminium ou en acier, qui permet de donner à la coulisse le cintrage et le galbage nécessaires pour s'adapter à la forme périphérique de la baie. Comme bien visible sur la figure 2, l'âme 1a de la partie 1 forme avec une aile 1d raccordée à l'âme 1a par un bras 1b, une "pince" 11 de montage et de maintien du dispositif sur la feuillure de la porte P, réalisée dans l'exemple décrit et représenté en tant que porte à caisson embouti 40 sur lequel est soudé pour le rigidifier un profilé 40a, l'ensemble étant ensuite garni d'une peau extérieure. La "pince" coopère également par serrage élastique avec la branche 40b d'un porte-coulisse 40c à section droite en gradin et qui est fixé sur le caisson et/ou le profil de rigidification par soudure ou soudo-brasure (figure 3). Outre la pince 11 que l'on vient de définir, la première partie 1 comprend également la coulisse 10 proprement dite limitée par l'âme 1a, une aile 1e qui lui est sensiblement parallèle mais de plus courte longueur et une aile 1c reliant les deux ailes parallèles entre elles pour définir une section en U dans laquelle vient en partie se loger la vitre ou glace mobile G montrée en trait mixte sur la figure 3, rappel étant fait ici, à toutes fins utiles, que toutes les parties du dispositif sont montrées dans leur condition non sollicitée, et cela conformément aux règles en vigueur dans l'industrie des élastomères.

Trois lèvres en matériau élastomère ou plastomère souple, (comme comparé au matériau constitutif de la pince et qui est, par exemple, d'une dureté d'environ 48 à 50 Shore D) sont associées à la coulisse proprement dite 10 et, plus précisément, une lèvre 5 raccordée à l'extrémité de l'âme 1a à la jonction de cette dernière avec le bras 1b, une lèvre 6 raccordée sensiblement dans la zone médiane du bras 1c, orientée vers la lèvre 5 et vers l'aile 1e de la partie 1 et une lèvre 7 portée par l'extrémité de l'aile 1e et orientée vers la lèvre 6. Des revêtements 5a, 6a, 7a déposés sur les parties des lèvres destinées à venir en contact avec la glace ou vitre G améliorent le glissement de celle-ci. Ces revêtements peuvent être réalisés sous forme de floc, comme suggéré par leur représentation hachurée ou, de préférence, constitués d'une couche de matériau à bonnes propriétés de glissement comme une polyoléfine ou du polytétrafluoroéthylène, laquelle est alors déposée sur l'ensemble du dispositif, tant pour lui donner un aspect agréable que pour aider au montage du dispositif sur le cadre de porte, comme il sera précisé ci-après.

A la partie 1 ainsi définie est associée une seconde partie 3 en le même matériau du type plastomère ou élastomère relativement dur qui forme la partie 1, les parties 1 et 3 étant reliées par une zone 4, amincie, formant charnière. La seconde partie 3 a la forme générale d'une équerre à deux bras 3a, 3b comportant un doigt d'accrochage 3c dans l'angle intérieur de l'équerre.

Selon l'invention, également, à la structure qui vient d'être décrite est associée une jupe 2 destinée à masquer l'aile 1e et le bras 3e après montage du dispositif sur la feuillure de baie qu'il est destiné à équiper. Comme bien visible sur les figures 2 et 3, la jupe 2 en matériau élastomère ou plastomère, plein ou cellulaire, semblable à celui des lèvres d'étanchéité 5-7 s'étend à l'extérieur de la coulisse proprement dite 10 à partir d'une zone A de l'aile 1e, où elle se confond avec la lèvre 7, jusqu'à une zone C à l'extrémité du bras 3b. Elle est d'une seule pièce avec la lèvre 7, d'une part, et est solidaire, d'autre part, de la seconde partie 3 du dispositif en une zone B sur la surface extérieure du sommet de l'équerre formée par les deux bras 3a, 3b de ladite partie 3. Galbée entre les zones de contact A et B de manière à retenir l'équerre 3 de l'autre côté, -par rapport au plan moyen de l'aile 1e-, de celui où se trouve la coulisse proprement dite 10, la jupe 2 présente entre les zones de contact B et C une partie 2b incurvée en sens inverse de sa partie 2a comprise entre les zones A et B, une ligne de rebroussement p formant, en quelque sorte, l'arête d'un dièdre dont les faces sont constituées par les parties 2b et 2c qui règnent entre la zone B et la zone C. Des lignes d'évidements e₁, e₂, e₃ à la jonction des parties 1 et 3 d'une part, et du doigt 3c avec le bras 3a, d'autre part, de même qu'une ligne d'évidement e₄ au sommet de l'arc ménagé par la jupe 2 entre la zone B et la ligne p forment des amincissements dans l'épaisseur du matériau du dispositif qui contribuent à la facilité de déformation des parties correspondantes pour la mise en place du dispositif.

Comme il apparaît des figures 2 et 3, cette mise en place a lieu en rapportant d'abord la pince 11 sur la partie d'extrémité des tôles du caisson, du profil de rigidification et du porte-coulisse, 40c, ce qui procure un premier verrouillage mécanique du dispositif sur le cadre de porte, puis en rabattant l'équerre 3 autour de la charnière formée par la zone 4 pour amener ladite équerre dans la position illustrée sur la figure 3, en laquelle le sommet de l'équerre chevauche le bord replié r d'un parement pa sensiblement parallèle au plan de la vitre ou glace G (c'est-à-dire à la partie 40b du porte-coulisse 40c) et en laquelle le doigt 3c est encliqueté sur un épaulement 41 ménagé au voisinage de l'extrémité externe de jonction du caisson 40 et d'une aile du profil de rigidification 40a, dirigée sensiblement perpendiculairement au parement pa. La jupe 2 est appliquée contre le bras 3a et l'aile 1e dont elle dissimule les ondulations éventuelles susceptibles d'apparaître lors de l'extrusion du dispositif avec l'armature 20, tandis que la ligne de rebroussement p est en contact avec une partie 9 de la porte, les parties 2 et 3 du dispositif remplissant alors une double fonction d'étanchéité du cadre de porte et d'esthétique en ménageant un habillage continu dudit cadre dissimulant les lignes de soudure ou de soudo-brasure, tout en constituant une bordure de "noir de style" sur la face externe de la baie.

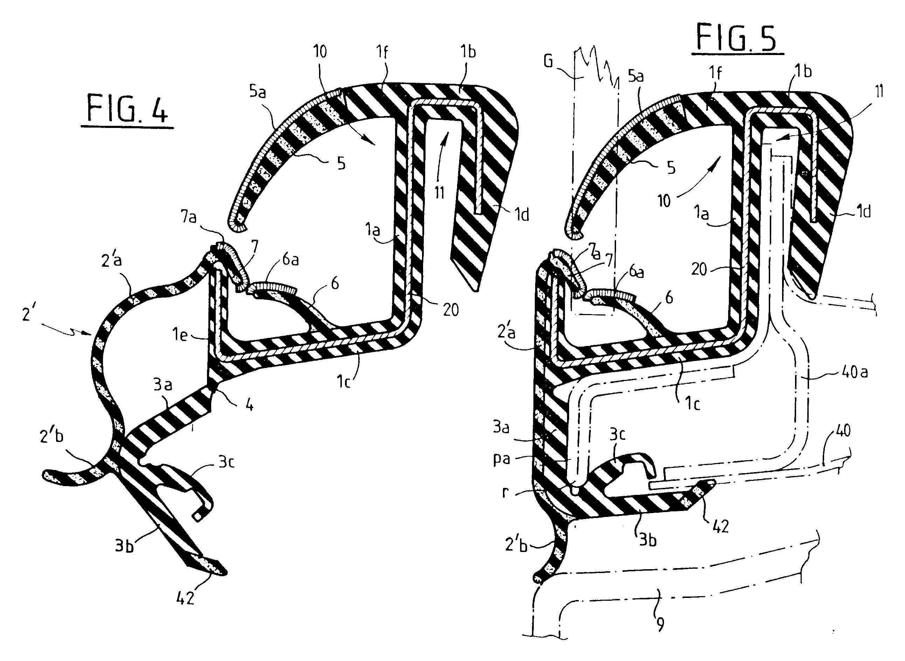

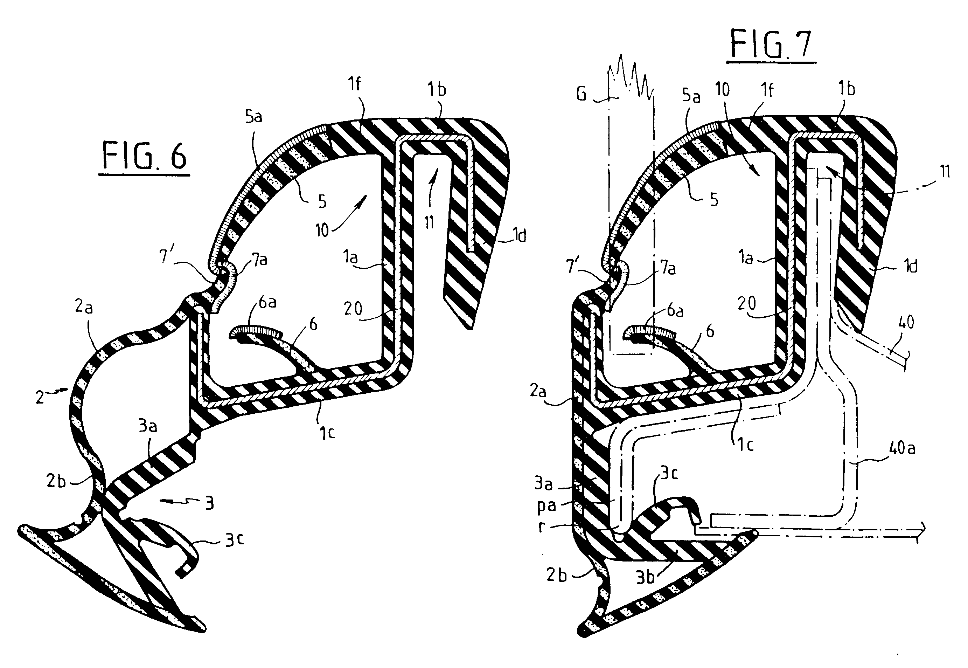

Le mode d'exécution illustré sur les figures 4 et 5 ne diffère de celui représenté aux figures 2 et 3 que par la forme de la jupe destinée à être plaquée sur l'aile 1e et le bras 3a pour parfaire le joint aérodynamique que ménage la partie 3 du dispositif. Dans cette forme de réalisation, la jupe 2′ reliant l'aile 1e de la partie 1 à l'équerre 3 ne comporte, au-delà de sa zone de contact B avec le sommet de l'équerre, qu'une partie libre, 2'b qui, divergeant de l'équerre forme un joint aérodynamique plaqué sur le brancard 9 de la porte après que le dispositif ait été mis en place. Dans ce mode d'exécution, également, l'accrochage de l'équerre que ménage la partie 3 du dispositif sur le bord replié r du porte-coulisse 40c fournit un second verrouillage mécanique du dispositif (le premier étant celui obtenu à l'aide de la pince 11) pour l'immobilisation simple et sûre du dispositif sur la baie qu'il équipe. Complémentairement, une courte lèvre 42 en matériau élastique souple prévue à l'extrémité du bras 3b de l'équerre remplit la fonction d'amortissement mécanique et sonore assurée par l'extrémité de la face 2c au voisinage de la zone C dans le mode d'exécution des figures 2 et 3.

Le mode d'exécution illustré aux figures 6 et 7 ne diffère de celui représenté aux figures 2 et 3 que par l'orientation de la lèvre 7′ (semblable à la lèvre 7 des réalisations précédentes) qui est dirigée vers la lèvre 6 avec laquelle elle est en contact en l'absence de glace ou vitre.

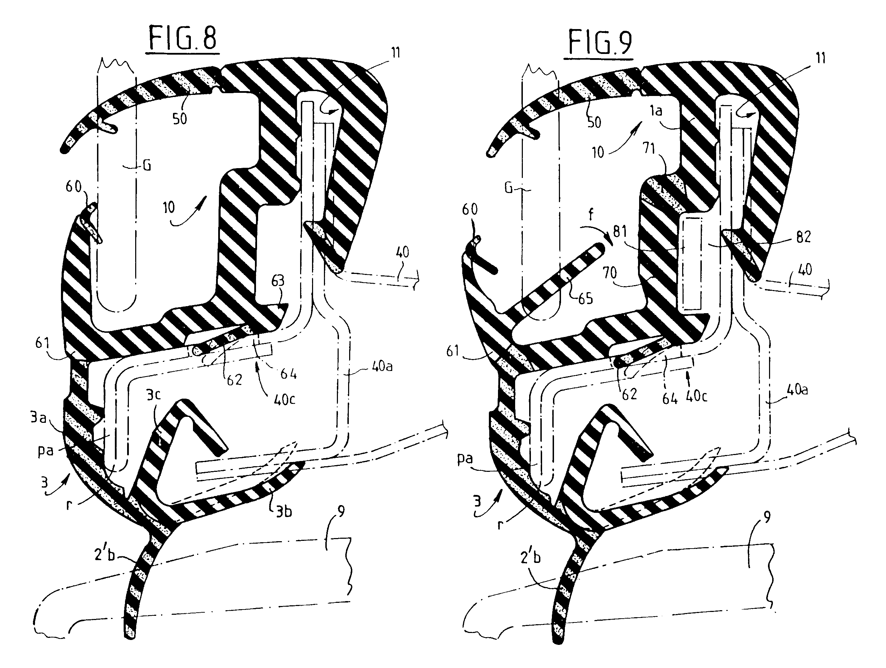

On se réfère maintenant à la figure 8 relative à une première forme de réalisation préférée d'un dispositif selon l'invention. Dans celle-ci, le dispositif est réalisé par co-extrusion de matériaux élastomères et/ou plastomères de duretés différentes et comporte, comme dans les réalisations précédemment décrites, une pince 11, une coulisse proprement dite 10 et des lèvres 50 et 60 (cette dernière à section droite en L) propre à coopérer avec les deux faces d'une vitre ou glace G pour en assurer l'étanchéité d'une part et former, d'autre part, un moyen anti-battement. A la pince 11 et à la coulisse 10 proprement dite, -qui peuvent être munies ou démunies d'armature métallique-, est associée, comme dans les réalisations précédemment décrites, une partie 3 à section droite quelque peu en équerre avec un doigt analogue au doigt 3c des réalisations précédentes. Contrairement à celles-ci, toutefois, alors que le doigt 3c et le bras 3b sont en matériau élastomère ou plastomère relativement dur, le bras 3a (qui est relié à l'angle extérieur 61 de la coulisse proprement dite) est en un matériau relativement souple, comme montré par la représentation à hachures et pointillés de la figure. Comme bien visible sur cette dernière, une partie 2′b de la partie 3, également en matériau souple, joue le rôle de la partie correspondante de la réalisation selon les figures 4 et 5, tandis qu'une lèvre 62, également en matériau souple, et qui fait saillie à partir du coin interne 63 de la coulisse 10 proprement dite est propre à coopérer avec un trou oblong 64 du porte-coulisse 40c.

La réalisation également préférée montrée sur la figure 9 comprend une pince 11 et une partie 3 identiques à celles de la réalisation selon la figure 8. Dans cette réalisation, toutefois, l'angle extérieur 61 de la coulisse 10 proprement dite est garni intérieurement d'un doigt 65 qui, lorsqu'il est amené à pivoter dans le sens de la flèche f, -quand la glace mobile G vient à son contact-, amène au contact de la face extérieure de ladite glace la lèvre d'étanchéité 60.

Dans cette réalisation qui, comme celle de la figure 8, peut ou non être munie d'une armature métallique, il est prévu complémentairement que l'âme 1a de ladite pince 11 soit reliée à l'aile 70 de la coulisse proprement dite dont elle n'est pas coplanaire par un cordon 71 en matériau souple, par exemple celui constitutif des lèvres 50, 60 et de la partie 3. La présence de ce cordon en matériau souple et, par suite, aisément déformable, permet au dispositif d'épouser la forme galbée et cintrée, le cas échéant, du cadre de porte, et cela sans qu'il soit nécessaire de conformer l'ensemble du dispositif à la sortie de la filière d'extrusion. On réduit ainsi considérablement le coût de fabrication du dispositif, d'une part, et on facilite son montage sur le cadre de porte, d'autre part, -quelle que soit la forme de ce dernier-. Comme indiqué ci-dessus, l'ensemble du dispositif est garni d'une couche de matériau à bonnes propriétés de glissement, comme une polyoléfine ou du polytétrafluoroéthylène, la présence du cordon 71 permettant de libérer les contraintes éventuelles lors de la mise en place du dispositif sur des cadres de formes relativement complexes.

Les figures 10 et 11 montrent deux dispositifs selon un mode de réalisation de l'invention, 75 et 76, associés aux portes avant et arrière d'un véhicule automobile, chaque dispositif comprenant un brin vertical 77 ou 78 associé à coupe d'onglet au brin horizontal/antérieur 79 et au brin horizontal/postérieur 80 respectivement. Comme montré schématiquement sur la figure 11, les brins 77, 79 et 78, 80 sont réunis entre eux par une équerre métallique 81, avantageusement mise en place dans le volume, comme 82, figure 9, ménagé par le désalignement de l'âme 1a et de l'aile 70, puis enrobage de ladite équerre dans un surmoulage en le même matériau que celui constitutif des parties relativement rigides du dispositif. Les brins verticaux 77 et 78 des dispositifs 75 et 76 alors d'un seul tenant, peuvent être découpés au droit du brancard de porte et pénétrer par leurs extrémités à l'intérieur du caisson de celle-ci.

Le dispositif de coulisse est avantageusement réalisé par extrusion ou coextrusion des divers matériaux le constituant, soit directement à la forme montrée sur les figures 2, 4 ou 6 qui est celle précédant le montage soit suivant un profil déployé, ensuite conformé pour ménager la pince de serrage, la coulisse proprement dite, etc.. cette conformation étant, le cas échéant mais non nécessairement, suivie d'un galbage et d'un cintrage pour adapter la forme du dispositif à celle du cadre de baie qu'il équipe.

L'invention n'est évidemment pas limitée aux modes de réalisation décrits et/ou représentés, ni à son application à des coulisses de vitres d'automobiles mais elle s'applique, mutatis mutandis, à toute coulisse de surface mobile, verticalement ou non, notamment à toute glace ou vitre de véhicule autre qu'une automobile, qu'il s'agisse de véhicule ferroviaire ou marin, ou autre.

Les divers matériaux peuvent être choisis dans de très larges gammes, le choix étant fait notamment en fonction des conditions d'utilisation du dispositif ou suivant la nature et/ou la forme de la vitre ou glace G en ce qui concerne les revêtements de glissement des lèvres d'étanchéité.

## Revendications

1. Dispositif d'étanchéité pour un cadre de vitre G notamment de porte de véhicule, du type comportant une première partie (1) de fixation et de montage sur la feuillure intérieure du cadre qui constitue une coulisse de vitre à lèvres d'étanchéité (5, 6, 7) au contact de la vitre et une deuxième partie (3) d'étanchéité du caisson de porte reliée à ladite première partie par une zone souple, caractérisé en ce que lesdites première (1) et seconde partie (3) sont séparées par une charnière (4) et que ladite seconde partie (3) a sensiblement la forme d'une équerre et porte dans son angle rentrant un doigt d'accrochage (3c) au contact d'un bord d'ancrage (r) porté notamment par la porte du véhicule.

2. Dispositif selon la revendication 1, caractérisé en ce qu'il est cintré et, le cas échéant, galbé pour lui donner, avant montage, la forme même du cadre (40) qu'il équipe.

3. Dispositif selon l'une quelconque des revendications 1 à 2, caractérisé en ce qu'il comprend, dans la zone de jonction d'un bras (1a) d'une "pince" de montage (11) en π et d'une aile (70) de la coulisse proprement dite (10), un cordon (71) en matériau élastomère ou plastomère de plus faible dureté que le reste du dispositif et qui permet à ce dernier d'épouser le contour du cadre de porte quelle que soit la forme spatiale de ce dernier.

4. Dispositif selon l'une quelconque des revendications 1 à 3, caractérisé en ce qu'il est d'une pièce pour former un brin vertical (77, 78) et un brin horizontal/avant (79) de coulisse d'une porte avant ou le brin horizontal/postérieur (80) d'une coulisse de porte arrière, le brin vertical (77, 78) étant raccordé au reste du dispositif par un accouplement en onglet rigidifié sur la face interne du dispositif par un insert en équerre (81) sur lequel est ensuite surmoulé un des matériaux constitutifs du dispositif.

5. Dispositif selon l'une quelconque des revendications 1 à 4, caractérisé en ce qu'il comprend en outre une jupe souple (2) solidaire de ladite seconde partie (3) sensiblement au niveau (B) de l'angle de l'équerre, à l'extérieur de celle-ci, et propre à masquer la surface extérieure desdites première et seconde parties (1, 3) après montage du dispositif sur la baie qu'il est destiné à équiper.

6. Dispositif selon la revendication 5, caractérisé en ce que ladite jupe (2) se prolonge, du côté opposé à celui de son attache à ladite première partie (1) et au-delà du sommet (B) de l'équerre où elle est solidaire de ladite seconde partie, par une courte languette (2_{b'}) qui prend appui, dans sa condition opératoire, sur la carrosserie (9) du véhicule ou sur la porte qu'équipe le dispositif.

7. Dispositif selon la revendication 5 , caractérisé en ce que ladite jupe (2) se prolonge au-delà du sommet de l'équerre par un profilé formant un dièdre (2b, 2c) dont l'extrémité de la branche (2c) qui n'est pas rattachée à l'équerre est solidaire de l'aile (3b) de l'équerre non reliée à ladite première partie (1).

8. Dispositif selon l'une quelconque des revendications 1 à 7, caractérisé en ce que ladite première partie (1) a, en section droite, quelque peu une forme de esse (S) dont l'âme médiane (1a) limite, d'une part, un profil (11) à branches opposées d'accrochage du dispositif sur la feuillure de la porte ou de la caisse du véhicule et, d'autre part, une coulisse proprement dite (10) comportant les lèvres d'étanchéité (5, 6, 7, ..., 50, 60) pour la glace ou vitre mobile (G).

9. Dispositif selon la revendication 8, caractérisé en ce que lesdites lèvres (5, 6, 7, ..., 50, 60) qui assurent l'étanchéité sur les deux faces de la vitre ou glace mobile (G) sont réalisées en un matériau de faible dureté et sont garnies de floc ou, de préférence, d'un matériau à bonnes propriétés de glissement comme une polyoléfine, du polytétrafluoroéthylène ou analogue également rapporté sur l'ensemble du dispositif.

10. Dispositif selon l'une quelconque des revendications 1 à 9, caractérisé en ce qu'une armature métallique est noyée dans le(s) matériau(x) élastomère(s) et/ou plastomère(s) formant le profil (11) à branches opposées d'accrochage sur la feuillure et la coulisse (10) proprement dite, les lèvres d'étanchéité (5, 6, 7, ..., 50, 60) et ladite seconde partie (3) étant, quant à elles, démunies d'armature.

11. Dispositif selon l'une quelconque des revendications 1 à 10, caractérisé en ce qu'à la face externe du fond de la coulisse (10) proprement dite est associée une lèvre souple (62) propre à coopérer avec un système d'accrochage ou de retenue (64) d'une tôle formant porte-coulisse (40c).

12. Dispositif selon la revendication 11, caractérisé en ce que le système d'accrochage ou de retenue (64) est constitué par un trou oblong.

13. Dispositif selon la revendication 11, caractérisé en ce que le système d'accrochage ou de retenue (64) est constitué par une rainure longitudinale.

14. Dispositif selon la revendication 11, caractérisé en ce que le système d'accrochage ou de retenue (64) est constitué par une excroissance longitudinale.

## Claims

1. A sealing device for a window frame G, in particular of a vehicle door, of the type comprising a first portion (1) for fastening and assembly on the inner rabbet of the frame which forms a glass slide with sealing lips (5, 6, 7) in contact with the glass and a second portion (3) for sealing the door casing connected to this first portion via a flexible zone, characterized in that the first (1) and second (3) portions are separated by a hinge (4) and in that the second portion (3) is substantially of angle form and bears in its re-entrant angle a hooking finger (3c) in contact with an anchoring edge (r) borne in particular by the vehicle door.

2. A device as claimed in claim 1, characterised in that it is arched and, where necessary, curved in order to provide it, prior to assembly, with the shape of the frame (40) in which it is fitted.

3. A device as claimed in any one of claims 1 to 2, characterised in that it comprises, in the zone of junction of an arm (1a) of a π-shaped assembly "gripper" (11) and a Mange (70) of the actual slide (10), a bead of elastomer or plastomer material which is not as hard as the remainder of the device and which allows the latter to fit the contour of the door frame whatever the spatial shape of the latter.

4. A device as claimed in any one of claims 1 to 3, characterised in that it is in one piece in order to form a vertical section (77, 78) and a horizontal/front section (79) of a front door slide or the horizontal/rear section (80) of a rear door slide, the vertical section (77, 78) being connected to the remainder of the device by a mitred connection made rigid on the inner surface of the device by an insert of angle form (81) on which one of the materials forming the device is then duplicate moulded.

5. A device as claimed in any one of claims 1 to 4, characterised in that it also comprises a flexible skirt (2) rigid with the second portion (3) substantially at the location (B) of the angle of the angle member and externally thereto, and adapted to mask the outer surface of the first and second portions (1, 3) after assembly of the device on the window which it is adapted to fit.

6. A device as claimed in claim 5, characterised in that the skirt (2) is extended, on the side opposite that on which it is attached to the first portion (1) and beyond the apex (B) of the angle member where it is rigid with the second portion, by a short tongue (2b') which bears, in its operating condition, on the bodywork (9) of the vehicle or the door on which the device is fitted.

7. A device as claimed in claim 5, characterised in that this skirt (2) is extended beyond the apex of the angle member by a profiled section forming a dihedron (2b, 2c) where the end of the branch (2c) which is not attached to the angle member is rigid with the flange (3b) of the angle member not connected to the first portion (1).

8. A device as claimed in any one of claims 1 to 7, characterised in that this first portion (1) is more or less S-shaped in cross-section, the median web (1a) of the S limiting, on one side, a profile (11) with opposite branches for connecting the device to the rabbet of the vehicle door or casing and, on the other side, an actual slide (10) comprising the sealing lips (5, 6, 7, ..., 50, 60) for the moving window or pane (G).

9. A device as claimed in claim 8, characterised in that these lips (5, 6, 7, ..., 50, 60) which ensure leak-tightness on both surfaces of the moving window or pane (G) are formed from a material that is not very hard and are covered with flock or, preferably, coated with a material with good sliding properties such as a polyolefine, polytetrafluoroethylene or the like also attached to the overall device.

10. A device as claimed in any one of claims 1 to 9, characterised in that a metal reinforcement is embedded in the elastomer and plastomer material(s) forming the profile (11) with opposite branches for connection to the rabbet and the actual slide (10), the sealing lips (5, 6, 7, ..., 50, 60) and the second portion (3) not being provided with reinforcement.

11. A device as claimed in any one of claims 1 to 10, characterised in that the outer surface of the base of the actual slide (10) is associated with a flexible lip (62) adapted to cooperate with a connection or retention system (64) of a sheet forming a slide carrier (40c).

12. A device as claimed in claim 11, characterised in that the connection or retention system (64) is formed by an oblong hole.

13. A device as claimed in claim 11, characterised in that the connection or retention system (64) is formed by a longitudinal groove.

14. A device as claimed in claim 11, characterised in that the connection or retention system (64) is formed by a longitudinal projection.

## Patentansprüche

1. Dichtungsvorrichtung für einen Rahmen einer Scheibe (G), insbesondere für eine Kraftfahrzeugtür, die ein erstes Teil (1) zur Befestigung und Montage im Innenfalz des Rahmens aufweist, das eine Scheibengleitfuhrung mit Dichtlippen (5, 6, 7) darstellt, die die Scheibe berühren und ein zweites Teil (3) aufweist, zur Abdichtung des Türrahmens, das mit dem ersten Teil über einen weichen Bereichen verbunden ist, dadurch gekennzeichnet, daß das erste Teil (1) und das zweite Teil (3) durch ein Scharnier (4) getrennt sind und daß das zweite Teil (3) im wesentlichen die Form eines Hakens aufweist sowie in seiner einspringenden Ecke einen Verankerungshaken (3c) aufweist, der einen Verankerungsrand (r) berührt, welcher insbesondere von der Kraftfahrzeugtür getragen wird.

2. Vorrichtung nach Anspruch 1, dadurch gekennzeichnet, daß sie gebogen und gegebenenfalls gewölbt ist, um ihr vor der Montage die Form des mit ihr zu bestückenden Rahmens zu erteilen.

3. Vorrichtung nach einem der Ansprüche 1 bis 2, dadurch gekennzeichnet, daß im Verbindungsbereich eines Armes (1a) einer π-förmigen Montageklemme (11) mit einem Flügel (70) der Gleitführung (10), eine Wulst (71) aus einem elastomeren oder plastomeren Material vorgesehen ist, die eine geringere Härte aufweist als die restliche Vorrichtung, um sich dergestalt an die Rahmenkontur anzuschmiegen, unabhängig von dessen räumlicher Gestalt.

4. Vorrichtung nach einem der Ansprüche 1 bis 3, dadurch gekennzeichnet, daß sie einstückig ist, um so ein vertikales Trum (77, 78) und ein horizontales/vorderes Gleittrum (79) für eine Vordertür oder ein horizontales/hinteres Gleittrum (80) für eine Hintertür zu bilden, wobei das vertikale Trum (77, 78) mit der restlichen Vorrichtung über ein keilförmiges versteiftes Kopplungsstück an der Innenwand der Vorrichtung in Gestalt eines Hakens (81) verbunden ist, welcher anschließend mit dem die Vorrichtung bildenden Material überzogen wird.

5. Vorrichtung nach einem der Ansprüche 1 bis 4, dadurch gekennzeichnet, daß sie außerdem eine weiche Abschirmung (2) aufweist, die fest mit dem zweiten Teil (3) im wesentlichen auf Höhe (B) des Winkels des Hakens, jedoch außerhalb von ihm, verbunden ist zur Abdeckung der Außenfläche der ersten und zweiten Teile (1, 3) nach der Montage der Vorrichtung an dem sie aufnehmenden Rahmen.

6. Vorrichtung nach Anspruch 5, dadurch gekennzeichnet, daß die Abschirmung (2) an ihrer der Befestigungsseite mit dem ersten Teil (1) abgewandten Seite und jenseits des oberen Endes (B) des Hakens, an dem sie mit dem zweiten Teil verbunden ist, durch eine kurze Lippe (2'b) verlängert ist, die sich während des Einsatzes auf der Karosserie (9) des Fahrzeugs abstützt oder auf der Fahrzeugtür.

7. Vorrichtung nach Anspruch 5, dadurch gekennzeichnet, daß die Abschirmung (2) jenseits des oberen Endes des Hakens durch ein diederförmiges Profilteil (2b, 2c) verlängert ist, wobei das Ende des Armes (2c), das nicht mit dem Haken verbunden ist, fester Teil des Flügels (3b) des Hakens ist, der nicht mit dem ersten Teil (1) verbunden ist.

8. Vorrichtung nach einem der Ansprüche 1 bis 7, dadurch gekennzeichnet, daß das erste Teil (1) im Profilschnitt eine ungefähr S-förmige Gestalt (S) aufweist, deren Mittenbereich (1a) einerseits ein Profil (11) mit sich gegenüberliegenden Verankerungsarmen der Vorrichtung am Türfalz oder der Fahrzeugkarosserie begrenzt und andererseits eine Gleitfuhrung (10) der Dichtlippen (5,6, 7,...50, 60) für die bewegliche Scheibe oder das bewegliche Fenster (G).

9. Vorrichtung nach Anspruch 8, dadurch gekennzeichnet, daß die Lippen (5,6, 7, ...50, 60) für die Abdichtung der beiden Seitenflächen der beweglichen Scheibe oder des beweglichen Fensters (G) aus einem Material geringer Härte bestehen und mit einem Filz versehen sind oder, vorzugsweise, mit einem Material mit guten Gleiteigenschaften, wie Polyolefin, Polytetrafluorethylen oder dgl. beschichtet ist, Wobei das Material die gesamte Vorrichtung bedeckt.

10. Vorrichtung nach einem der Ansprüche 1 bis 9, dadurch gekennzeichnet, daß eine metallische Verstärkung in dem elastomeren und/oder plastomeren Material(ien) eingebettet ist, um so ein Profil (11) mit sich gegenüberliegenden Verankerungsarmen zu formen im Falz der Gleitführung (10), wobei die Dichtlippen (5,6, 7,...50, 60) und das zweite Teil (3) nicht mit der Verstärkung versehen sind.

11. Vorrichtung nach einem der Ansprüche 1 bis 10, dadurch gekennzeichnet, daß die Außenfläche des Bodens der Gleitfuhrung (10) einer weichen Lippe (62) zugeordnet ist, die mit einem Verankerungssystem oder Haltesystem (64) eines als Gleitführungsträger (40c) dienenden Bleches zusammenwirkt.

12. Vorrichtung nach Anspruch 11, dadurch gekennzeichnet, daß das Verankerungssystem oder Haltesystem (64) aus einer langgestreckten Öffnung besteht.

13. Vorrichtung nach Anspruch 11, dadurch gekennzeichnet, daß das Verankerungssystem oder das Haltesystem (64) aus einer Längsnut besteht.

14. Vorrichtung nach Anspruch 11, dadurch gekennzeichnet, daß das Verankerungssystem oder das Haltesystem (64) aus einem Längsvorsprung besteht.
